# EUROPEAN PATENT APPLICATION

(11) **EP 3 968 109 A1**
(43) Date of publication of application: **16.03.2022**
(21) Application number: 21179657.8
(22) Date of filing: 15.06.2021
(51) Int. Cl.: G05B 19/418, B25J 9/00, B25J 9/16

(54) **APPARATUS AND METHOD FOR THE UNLOADING AND AUTOMATIC SORTING OF CUTTING PARTS**

(30) Priority: 09.09.2020 ES 202030915
(71) Applicant: Tecnologia de Corte E Ingenieria, S.L., 46610 Guadasuar (ES)
(72) Inventor: Mateu Sentamans, EMILIO, 46610 GUADASUAR (ES)
(74) Representative: Maldonado Jordan, Julia

(57) **Abstract**

The present invention relates to an apparatus for the unloading and automatic sorting of cutted parts, which will be located contiguous to and in juxtaposition with a cutting machine comprising a gripping tool, a processing unit, and means for communication between the processing unit and the cutting machine, where said apparatus achieves automatic unloading of the exchange table, allowing a quick freeing thereof so that it can continue with the production process. Likewise, the apparatus has means for the autonomous calculation of the movements and paths of the gripping tool to enable adapting same the morphology and characteristics of the cutted parts, without having to perform programming between different part references.

## Description

### Field of the Art

The present invention relates to the field of robots for industrial application, more specifically to robots for industrial application with manufacturing part unloading and sorting functions.

### Background of the Invention

Unloading devices assembled contiguous to a part processing machine, such as a cutting machine, which allow the removal and unloading of already cut parts, are widely known today.

Different configurations which use clamps or gripping elements covering the entire table on which the already cut elements are placed, such that they remove the plate with the parts along with the surplus material, are known in the state of the art. The plate is then stacked by placing one on top of another, joining all the cut parts together in several layers, along with the surplus plate scraps.

This situation compromises and complicates the sorting of cut parts, as well as their subsequent separation from the surplus material. Separation of the parts by reference and automation of the process of sending each reference to the next part manufacturing and processing step, such as the palletizing or storage of said parts, are thereby prevented.

Other methods which use a robot for unloading the parts and subsequently sorting them individually are also known in the state of the art, these methods requiring many steps to be performed for each unloaded part, so the wait times of the earlier machine are prolonged and the process must be halted until sorting has ended.

For example, document WO2020053769A1 is known in the state of the art and describes a sheet handling method and apparatus suitable for picking up sheets to be delivered to a cutting center from a pack, removing a separating foil between said sheets, comprising lifting and removing means for a top sheet, equipped with upper gripping heads, and air flow generating means generating an air flow above said pack of sheets, with control means of said lifting means.

Document EP2164678A2 is also known in the state of the art and describes a system for the loading and unloading of sheets, which can be of metal, serving a laser cutting center, wherein the system comprises a pair of rails supported at a preset height above a feeding tray of the cutting center, wherein at least one Cartesian robotized hand is movably mounted, capable of moving along horizontal axes as well as along a vertical axis. It also comprises at least two bridge cranes sliding on the rails, each supporting at least one pair of robotized hands, these robotized hands having an electromagnetic pick-up head which may be coupled with a suction-cup device.

Document EP3632588A1 is also known in the state of the art and describes an apparatus for handling sheets and the operating method thereof, comprising: a handling unit for transferring sheets to and from a sheet change support comprising a substantially horizontal position; and an electromagnetic beam unit which generates signals arranged on a plane which is intercepted by said sheets when they take up a position different from a substantially horizontal one. This beam generator is configured on at least a couple of linear bars arranged at the same height for generating a horizontal-mesh barrier.

Unloading robots of this type which do not include a method for the automatic calculation of paths and gripping or holding points mean that the robot must be reprogrammed every time the cutting machine processes different shapes and/or parts, greatly reducing the versatility of the process, requiring skilled staff for programming it according to the type of part being cut.

Furthermore, they have the drawback of not being able to automatically communicate which part reference is being processed at a given time, so it is not known which references have been unloaded or where said unloading took place.

Today, the production of cut parts evolves constantly both in terms of laser cutting machines and plasma or water jet cutting machines. Therefore, it is imperative and essential to provide a method for the unloading and rapid sorting of the material which allows a quick replenishment of the material, preventing down times generated in the preceding machine and increasing production flow.

### Description of the Invention

The object of the present invention is to overcome the drawbacks of the state of the art described in detail above, i.e., to look for a machine for the unloading and automatic sorting of cutting parts which achieves an easy sorting of said parts and allows maintaining the traceability of the sorted references, freeing the exchange table quickly, preventing the production of the cutting parts from being held up.

Specifically, the present invention presents a system for the unloading and sorting of cutting parts, which system removes the cut parts from the exchange table of the cutting machine and separates them from the surplus material, processing the separation thereof automatically, without requiring user intervention, even in the case in which the morphology and/or the dimensions of the cut parts is changed, maintaining the traceability of the assembly according to its references and maintaining communication with the rest of the production process.

In order to achieve this, the invention comprises at least a first structure with a first end with a handling robot, located in juxtaposition with a cutting machine; and a second end connected to a second structure, which will be perpendicular or substantially perpendicular to the first structure.

It will also comprise means for moving the first structure on the second structure, so that the first structure can perform translation movements along the length of the second structure.

Likewise, it will comprise a processing unit operatively connected to the elements that comprise the discharge system.

It can also include as many auxiliary elements as necessary, configured as receiving elements for the cut parts.

According to this system, the parts handling robot, which can be of any type, such scara, delta or anthropomorphic, will be located at the end of the first structural, and will be in charge of collecting the parts cut in a previous process, separating them of excess material, and placing them on a receiving element, such a conveyor belt, located on the aforementioned structure.

In order to achieve the automation of the unloading system, object of the present invention, the handling robot will be in constant communication with the processing unit, directly connected to the adjacent cutting machine, obtaining the CNC file used by it to cut the parts; and sharing the part processing variables, with which the exact position of the part on the exchange table can be known, as well as its possible rotation.

In this way, the geometry, the position, the area and the reference of each part are extracted from the CNC file, so that the processing unit can send these information to the handling robot to unload the part.

The processing unit will compare the information obtained from the CNC files with the available tools, calculating the gripping points, the type of tool to be used and the weight that the assembly will have, necessary to adjust the dynamics of the robot's movement.

Once the above information has been obtained and / or calculated, the control unit organizes the trajectories and movements required by the robot to grab the part and deposit it on the first structure.

That is, a system is proposed that automatically controls the movements that the handling robot must carry out in the maneuver of collecting and depositing the cut piece, from the reception of the information on the morphology and dimensions of the piece, that is contained in the own CNC programs used by the cutting machine. Likewise, the choice of the gripping tool to use will also be automatic.

This allows a complete adaptability of the parts unloading system, which avoids having to reprogram the handling robot every time the conditions of the parts obtained after the cutting procedure are changed.

As indicated above, the parts handling robot will be located at the beginning of the first structure, which will be located in juxtaposition to the work table of a cutting machine, so that the robot will gradually remove the parts already cut. from the work table and depositing them on the aforementioned structure, allowing the cutting machine to continue cutting tasks.

To facilitate and optimize the tasks of unloading the work table, carried out by the handling robot, the structure may include a translation movement on the location of the discharge, along the work table of the cutting machine.

The structure will also be in constant communication with the processing unit, so that, in the event that the robot is not long enough to reach an area of the part, the processing unit will send a movement order to the first structure. crosswise along the longitudinal structure until reaching a new location where the robot can continue removing parts.

Likewise, it may include a series of positions that may be occupied by different elements, such as boxes, pallets or transport vehicles.

Additionally, transport elements such as conveyor belts, indexed tables or hanging conveyors can be added.

Also, this system may include means of communication with the manufacturing management system implemented in the production process in which the device is installed, so that it may be part of it, and participate in the production controls of the different manufacturing processes, so that the calculation of times or the performance of tasks can be managed together with the rest of the elements that comprise the production process.

Based on the foregoing, the novelties included in the unloading system and the unloading system-associated method which achieve the effects set forth above in this section, overcoming the defects not resolved by the systems known today in the state of the art, are described in detail.

### Brief Description of the Drawings

To complement the description that is being made and in order to help better understand the features of the invention, a set of drawings in which the following is depicted in an illustrative and non-limiting character is attached as an integral part of said description:

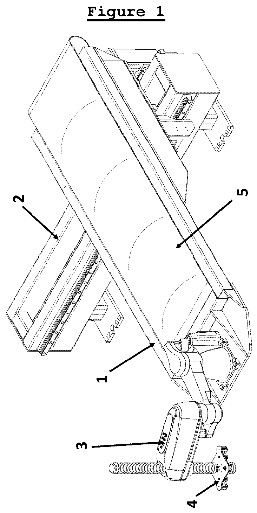

Figure 1.- General view of the invention.

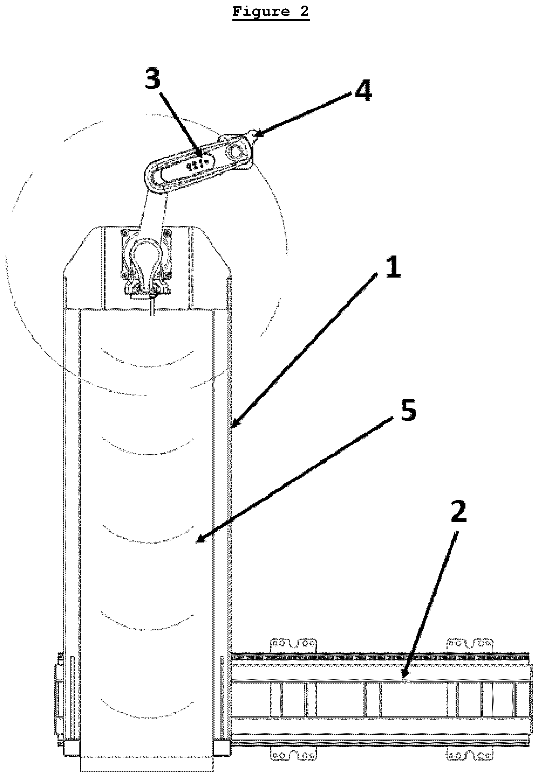

Figure 2.- Plan view of the invention.

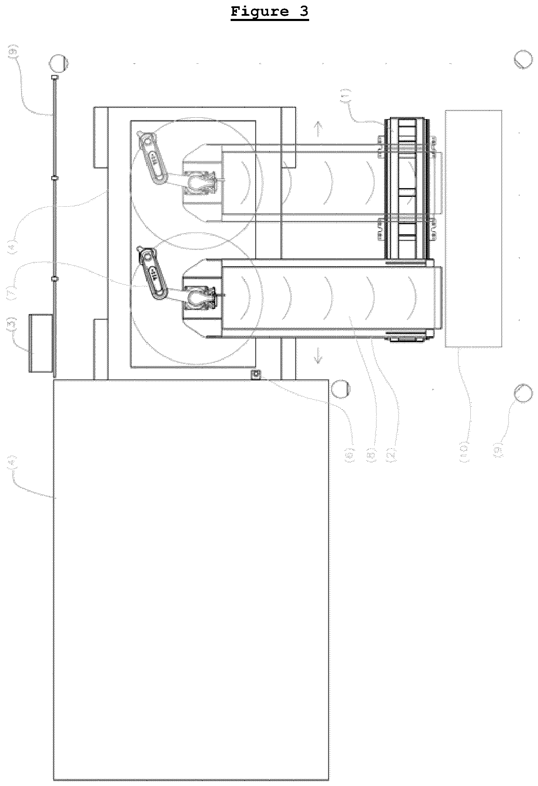

Figure 3.- Example of translational movement of the first structure.

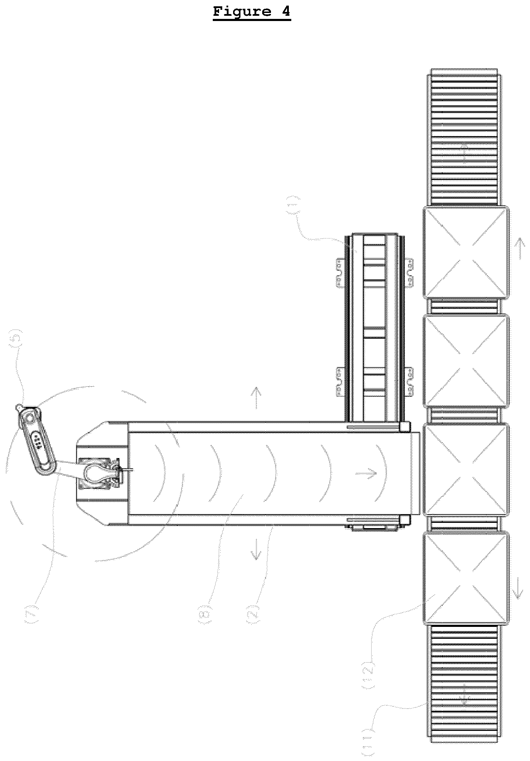

Figure 4.- Example of application with boxes and / or drawers.

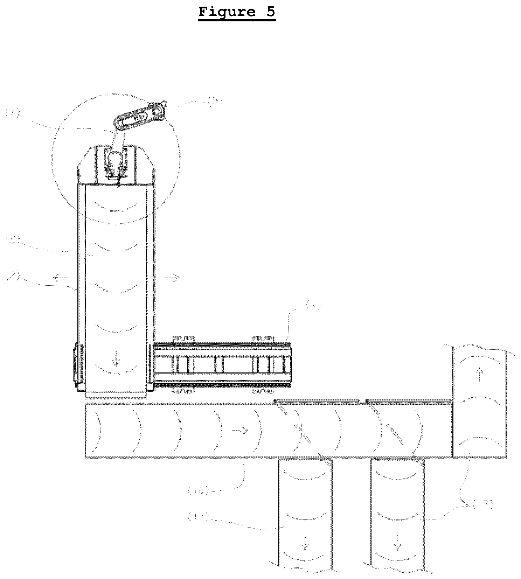

Figure 5.- Application example with indexed tapes.

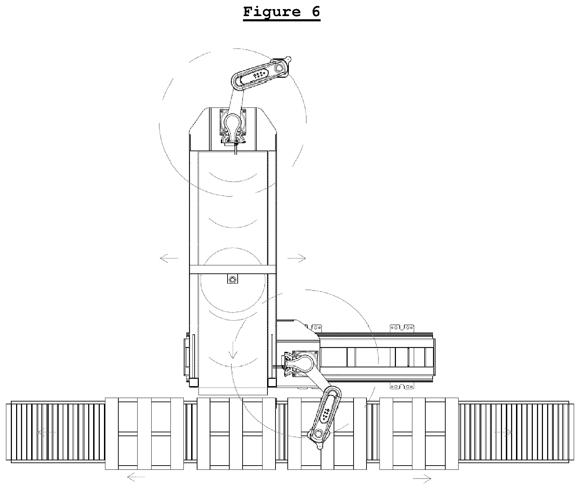

Figure 6.- Application example with a second robotic element.

List of references and figures:
1. First structure
2. Second structure
3. Robotic element
4. Gripping tool
5. Conveyor belt of the first structure
6. Conveyor belt of the final receiving area
7. Boxes / drawers

### Preferred Embodiment of the Invention

In the following detailed description of the preferred perform, reference is made to the attached drawings which are part of this specification and show, by way of illustration, specific preferred performance in which the invention can be carried out. These performance are described with sufficient detail to allow those skilled in the art to carry out the invention, and it is understood that other embodiments can be used and logical structural, mechanical, electrical, and/or chemical changes can be made without departing from the scope of the invention. To avoid details that are not necessary for those skilled in the art to carry out the detailed description, it must not therefore be interpreted in a limiting manner.

More specifically, an automatic unloading system for cutting pieces is proposed, which will be located contiguously and in juxtaposition with a cutting machine that comprises at least one exchange table, where the system is characterized in that it comprises:
- at least a first structure 1 with a conveyor belt 5 on its upper side, and with at least one first end with a robotic element 3, such as a robotic arm; and with a second end in connection with a second structure 2, perpendicular or substantially perpendicular to the first structure 1;
- means for moving the first structure 1 on the second structure 2, so that a translation movement of the first structure 1 on the second structure 2 is configured;
- a processing unit operatively connected to the above elements, and in communication with the cutting machine.

Where the control unit is configured to receive information on the morphology and / or dimensions of the pieces cut in the cutting machine, define the gripping maneuvers of the cut pieces from the previous information, and send the necessary maneuvers to the robotic element 3.

And where the robotic element 3 comprises at least one tool for gripping and / or manipulating the cut pieces, configured to grab the cut pieces from the exchange table of the cutting machine, and deposit them on the conveyor belt 5, according to the information received from the processing unit.

According to this first embodiment, there is a robotic element 3, in constant communication with the control unit, which will be in constant communication with the cutting machine adjacent to the system object of the present invention.

From the cutting machine, information about the morphology and / or dimensions of the part will be sent to the control unit so that it will be configured to calculate the necessary maneuvers that the robotic element 3 must perform to remove the cutting parts from the exchange table of the cutting machine.

Subsequently, the control unit will send the maneuvers to the robotic element 3, to remove the cut pieces from the exchange table of the cutting machine.

The constant sending of information between the cutting machine and the processing unit allows in situ updating of the pieces that are being cut, as well as their morphology, so that the variation in the maneuvers that the element must perform The robotics will be automatic, since the processing unit itself will be in charge of updating them, without the need for the intervention of a technician, who must stop production in order to make the change in the robotic element program.

According to this first embodiment, a system for unloading cutting parts coming from a cutting process performed in a cutting machine is achieved, said system removing the parts from the part exchange area and placing them on a conveyor belt which will transfer them to a secondary area, allowing the cutting machine to be freed in a quick and efficient manner, allowing the manufacturing process to continue as a result of a quick freeing of the exchange table so that the cutting machine can be replenished with new material, maintaining a high production flow thereof.

In a preferred perform, the apparatus is characterized in that it comprises means for communication with the production management computer system implemented in the production plant in which the present invention is installed, such that it can participate in the production process autonomously.

In a preferred embodiment, the apparatus will comprise a receiving final area with a conveyor belt, located at the end of the conveyor belt 5 of the first structure, such that the cutting parts unloaded on the conveyor belt 5 automatically reach the conveyor belt of the receiving area.

In a possible example, on the conveyor belt 6 of the final reception area, boxes and / or drawers 7 will be placed, where an operator, manually or with a production and / or manufacturing management computer protocol, will indicate to the processing unit 3 which part references go to each box 7, moving the conveyor belt 6, so that the corresponding box 7 is facing the conveyor belt 5 of the first structure 1 to receive the corresponding part.

In another possible example, alternative to the previous one, on the conveyor belt 6 of the final reception area, there will be pallets or self-guided vehicles, and an operator or a production and / or manufacturing management computer protocol will indicate to the unit process 3 which part references go to each pallet, moving the conveyor belt 6 so that the corresponding pallet is facing the conveyor belt 5 to receive the corresponding part.

In another example, a second robot, or pair of robots, located at the end of the transverse belt 5 will grab the part, locating it autonomously, for example by artificial vision, with an artificial vision camera, arranged on the conveyor belt 5 So the second robot will grab the piece and stack it on the pallet in the order indicated by the operator or by the computer protocol.

In a last example, alternative to the previous ones, it will comprise an indexed belt that receives the pieces from the conveyor belt 5, being diverted by reference to different belts that transport the pieces to a supposed next production or manufacturing process.

In accordance with the aforementioned, the method of automatic unloading of cutting pieces is also presented, for any of the mentioned preferred embodiments, which is characterized in that it comprises the following phases:
1. the cutting machine cutting the part,
2. sending the information about the part to the processing unit,
3. where the processing unit performs the following processes:
   o comparing the received data with the operating parameters of the gripping tools,
   o selecting the tool and/or type of grip for the part, according to the preceding comparison;
   ∘ performing calculation of the holding points and the weight of the assembly,
   ∘ performing calculation of the dynamics of the robotic element, and
   ∘ performing calculation of the paths and movements of the robotic element;
4. then, the robotic element grips the part and performs movements according to the performed calculations, and deposits the part on the conveyor belt 8 of the transverse structure.

A complete process in which the apparatus object of the present invention automatically unloads an exchange table of a cutting machine, without causing the production process to stop, is thereby configured.

Furthermore, by performing calculations automatically, programming prior to the start of a production process is not necessary because the system itself will perform the calculation of the movements, regardless of the morphology or characteristics of the part to be unloaded.

An apparatus which is capable of programming movements and paths in an automatic and autonomous manner and is adapted to the parts cut by the cutting machine, without requiring manual programming by a user, can thus be achieved. This gives the apparatus complete autonomy, only receiving information about the references cut in the machine, where it can even alternate same, without requiring interruptions.

In a preferred embodiment of the preceding method, a step of translational movement of the first structure 1 along the second structure 2 will be included so that when the robot is unable to reach an area of the parts, the processing unit 3 moves the first structure 1 to a new location in which the robot can continue to remove parts.

The industrial application of the present invention is obvious, as it allows the system for the removal and storage of the elements produced by a cutting machine to be completely automated as a result of the calculation algorithms determining which tools to be used and where the gripping points of the parts must be located depending on the geometry thereof. All this contributes to a quick and efficient unloading, freeing the exchange table of the cutting machine and sorting the cut parts.

## Claims

1. Automatic unloading system for cutting pieces located in juxtaposition with a cutting machine comprising at least one exchange table, **characterized in that** it comprises:
∘ at least a first structure (1) with a conveyor belt (5) on its upper side, and with at least a first end with a robotic element (3), and a second end in connection with a second structure (2), which it will be perpendicular or substantially perpendicular to the first structure (1) ;
∘ means for moving the first structure (1) on the second structure (2), so as to configure a translation movement of the first structure (1) on the second structure (2);
∘ a processing unit operatively connected to the above elements, and in communication with the cutting machine;
where:
the control unit is configured to receive information on the morphology and / or dimensions of the cut pieces in the cutting machine, define the gripping maneuvers of the cut pieces and send the information to the robotic element (3);
and where the robotic element (3) comprises at least one tool for gripping and / or manipulating the cut pieces, configured to grab the cutting pieces from the exchange table of the cutting machine, and deposit them on the conveyor belt (5), according to the information received from the processing unit.

2. The apparatus for the unloading and automatic sorting of cutting parts according to claim 1, **characterized in that** it comprises at least one receiving area with a conveyor belt (6) located at the end of the conveyor belt (5) of the first structure.

3. The apparatus for the unloading and automatic sorting of cutting parts according to claim 1, **characterized in that** it comprises means for communication with at least one production management computer system.

4. A method for the automatic unloading of cutting parts, **characterized in that** it uses an apparatus according to any of the preceding claims and comprises the phases of:
∘ the cutting machine cutting the part;
∘ sending information about the part to the processing unit;
∘ the processing unit comparing the received data with the operating parameters of the gripping tools;
∘ the processing unit selecting the tool and/or type of grip for the part;
∘ the processing unit performing calculation of the holding points and the weight of the assembly;
∘ the processing unit performing calculation of the dynamics of the robotic element,
∘ the processing unit (3) performing calculation of the paths and movements of the robotic element;
∘ the robotic element performing gripping according to the preceding calculations;
∘ the robotic element performing movement according to the preceding calculations;
∘ the robotic element placing the part on the conveyor belt of the transverse structure.

5. The method for the automatic unloading of cut parts according to the preceding claim, **characterized in that** it comprises a step of translational movement of the first structure (1) along the second structure (2).
